# EUROPEAN PATENT SPECIFICATION

(11) **EP 3 110 678 B1**
(45) Date of publication and mention of the grant of the patent: **21.08.2019**
(21) Application number: 15751608.9
(22) Date of filing: 13.01.2015
(51) Int. Cl.: B62B 3/04, B62B 3/10, E04G 21/16, B62B 5/00

(54) **MOBILE ASSEMBLY TROLLEY**
WAGEN MIT MOBILER ANORDNUNG
CHARIOT D'ASSEMBLAGE MOBILE

(30) Priority: 24.02.2014 DK 201400097; 03.07.2014 DK 201400363
(43) Date of publication of application: 04.01.2017
(73) Proprietor: H+H Danmark A/S, 8260 Viby J (DK)
(72) Inventor: LYPART, Jacob, 8260 Viby J (DK); GORM HILDING RASMUSSEN, Elith, 8260 Viby J (DK)
(74) Representative: Zacco Denmark A/S
(86) International application number: PCT/DK2015/050006
(87) International publication number: WO 2015/124157

(56) References cited:
- EP-A2- 1 645 484
- EP-A2- 1 645 484
- WO-A1-01/20102
- DE-U1-202012 104 180
- FR-A1- 2 973 360
- GB-A- 2 224 263
- US-A- 4 175 899
- US-A- 4 810 151
- US-A- 5 584 646
- US-A1- 2001 052 708

## Description

The invention as defined in claim 1 relates to a mobile assembly trolley for transport and positioning of building elements such as plates, beams, poles and blocks, which assembly trolley includes a first frame, wheels or similar on said first frame, and a movable carrying profile and a fixed and mostly vertical profile to which the movable carrying profile is rotatably mounted in a first turning joint and a tool holder for securing a tool, which tool holder is rotatably mounted to the movable carrying profile, which carrying profile by a first displacement design such as a hydraulic cylinder is designed to rotate around the first turning joint by which the tool holder performs a movement in vertical direction and that the tool holder includes a second displacement mechanism including a second displacement design such as a hydraulic cylinder for displacement of the tool holder in horizontal direction.

When elements are to be mounted at a building site, it often involves heavy manual lifts, which can lower the speed of the building process, but also be harmful in the long run or directly dangerous for the personnel on the building site. There are known machines to help with this type of tasks, but they are often non-manoeuvrable and non-flexible in the types of tasks they can carry out.

It can also be time-consuming to move and hold the often 100 - 200 kg heavy elements, while they are mounted. The current machines built for the purpose have a lack of flexibility in both manoeuvrability and duration of function. Furthermore, these machines can also not be used at element mounting in rooms with limited room height, due to lack of ability for tilting.

From DE202012104180 U1 is known a mobile assembly trolley, of the type stated in the introduction. The assembly trolley is however not designed in such a way that the items, which are transported with the trolley, can be tipped around a horizontal axis, for which reason the assembly trolley's flexibility is limited. Moreover, the assembly trolley is preferably only suited for handling items with smooth surfaces such as panes / glass plates.

US5584646A as closest prior art document discloses a mobile self-propelled apparatus having a mechanism for such a tipping of transported items around a horizontal axis. The self-propelled apparatus includes a first frame on wheels, a movable carrying profile, a vertical profile to which the movable carrying profile is rotably mounted in a first turning joint, and a tool holder for securing a tool, which tool holder is rotably mounted to the movable carrying profile, which carrying profile by first hydraulic cylinders is designed to rotate around the first turning joint by which the tool holder performs a movement in vertical direction. The tool holder includes second hydraulic cylinders for displacement of the tool holder in horizontal direction, and third hydraulic cylinders designed to tip the tool holder around a horizontal axis system, which third hydraulic cylinders includes a first movable end which first movable end is connected rotably to the tool holder and which third hydraulic cylinder is connected to the movable carrying profile which is connected to a vertical profile which is connected to the first frame.

The tool was designed for maintenance shops for servicing mining trucks by lifting, holding and moving heavy tools and equipment.

However, it may be possible, by application of the movable tool holder of the disclosed apparatus of US5584646A to displace horizontally and vertically and tip tools or some non-heavy equipment carried by the tool holder, by application of hydraulic mechanisms. The tool can lift, lower and tip different items by application of a set of first cylinders and carry out a displacement in horizontal direction. Whether the apparatus can also handle building elements by both lifting, moving and tipping them is questionable. These handling activities are very important when the building elements must for example be let in through shallow openings to a building room, since it is necessary here to tip for example the large plates such that they lie mostly flat parallel to the apparatus' carrying profile. When the plates are hereafter into the actual room, the hydraulic cylinder, which is a part of the rotation of the tool holder, should be activatable such that it pushes the tool holder, whereby it will turn around an axis, until it is positioned mostly horizontal. If the plate has to be taken out again, the hydraulic cylinder has to retract, whereby the tool holder turns around the axis such that the upper edge of it is tipped backwards, and the attached plate follows. The apparatus may be able to both move different elements and hold less heavy items in position while they are being mounted, but not heavy building elements.

The drawbacks of the mobile assembly trolley of US5584646 is that it cannot withstand the high loads of building elements.

FR2973360A1 discloses also a lifting apparatus. This apparatus is for lifting windows. It has sucking cups as the tool holder and tool. The apparatus comprises a first frame on wheels, a movable carrying profile mounted on a vertical profile in one end of the movable carrying profile and in the other end a connecting part to the tool holder. Levers provide the turning of the profiles around their longer axes. The apparatus is strong enough for lifting windows but not suitable for lifting building equipment especially when these have to be lifted through shallow openings.

It is therefore an object of the invention to provide a mobile assembly trolley , which can withstand high loads, which occur when working with building elements and which are useful for handling building elements through shallow openings.

This is achieved with a mobile assembly trolley according to claim 1, wherein the second displacement mechanism includes a gear construction and the second displacement design such as a hydraulic cylinder for creation of a horizontal displacement of the tool holder and wherein the second displacement design is designed for, by a displacement length L1, to transmit a horizontal displacement to the tool holder by which the tool holder is moved in horizontal direction with a displacement length on L2 where L2 is larger than L1, and in that the gear construction includes a curved profile composed of at least two profile pieces connected in a profile turning joint by which the two profile pieces can rotate around the turning joint in relation to each other, which curved profile includes a first end and an opposite second end, and that at least the first end is secured to the displaceable tool holder in a second turning joint, and that the second displacement design includes a first and movable end part, which first end part is rotatably connected to the profile between the profile turning joint and the second turning joint.

In this way it thus becomes possible, by application of the movable tool holder, to displace horizontally and vertically and tip the building element carried by the tool, by application of primarily hydraulic mechanisms. The tool holder's gripping geometry makes it possible to change the tool as needed including drift, fork, u-bracket, clamping pliers, frame tool, L-shaped fork and box. These tools can lift, lower and tip different items by application of the first displacement design and carry out a displacement in horizontal direction. The assembly trolley can also handle the building elements by tipping them, when the elements must for example be let in through shallow openings to a building room, since it is necessary here to tip for example the large plates such that they lie mostly flat parallel to the assembly trolley's carrying profile. When the plates are hereafter into the actual room, the hydraulic cylinder, which is a part of the rotation of the tool holder, will be activated such that it pushes the tool holder, whereby it turns around an axis, until it is positioned mostly horizontal. If the plate has to be taken out again, the hydraulic cylinder will retract, whereby the tool holder turns around the axis such that the upper edge of it is tipped backwards, and the attached plate follows. The assembly trolley can both move different elements and hold them in position while they are being mounted.

The displacement designs are above stated as hydraulic cylinders, but can also include pneumatic cylinders or actuators.

The item can be raised and lowered in either vertical or tilted position. The head is connected to the assembly trolley's body by parallel carrying arms, which are controlled by the primary hydraulic mechanism; these carrying arms can be displaced parallel, such that the head is held at angle by raising and lowering. In this way it thus becomes possible to have an assembly trolley, which can move different elements and hold them in position, as they are being mounted.

At the same time, the assembly trolley can, via the tilting of the head, enter places with low room height.

The tool is preferably a replaceable tool, but the assembly trolley can obviously also be constructed with a tool, which is not replaceable if desired.

Further, the second displacement mechanism includes a gear construction and a second displacement design such as a hydraulic cylinder for creation of a horizontal displacement of the tool holder. The second displacement design is designed for, by a displacement length L1, to transmit a horizontal displacement to the tool holder by which the tool holder is moved in horizontal direction with a displacement length on L2 where L2 is larger than L1.

The gearing leads to that certain throw of the hydraulic cylinder gives rise to a greater horizontal stroke and movement of the tool, which holds the building element. The mobile assembly trolley does not require large stroke cylinders and can thus more easily get ahead in areas with little space and it is easier to position the building element.

According to the present invention as stated in claim 1, the gear construction includes a curved profile composed of at least two profile pieces connected in a profile turning joint by which the two profile pieces can rotate around the turning joint in relation to each other, which curved profile includes a first end and an opposite second end, and that at least the first end is secured to the displaceable tool holder in a second turning joint, and that the second displacement design includes a first and movable end part, which first end part is rotatably connected to the profile between the profile turning joint and the second turning joint.

A stable and very solid gear construction is hereby achieved, which can withstand the high loads, which occur when working with building elements.

In a preferred embodiment, and as stated in claim 2, the assembly trolley includes a fourth displacement mechanism designed to displace the tool holder in vertical direction, which fourth displacement mechanism includes a fourth displacement design such as a hydraulic cylinder including a first displacement end and a second displacement end, which first displacement end is secured to the tool holder and which second displacement end is fixed to a first frame part, and that the fourth displacement mechanism includes a vertical guideway axis parallel to the fourth displacement design, which guideway at one end is mounted to the first frame part and that the tool holder includes a sliding part by which the tool holder is vertically displaceable around the guideway and axis parallel to this.

It is hereby achieved that the assembly trolley can carry out additional vertical lifts and fine-adjust the placement of a building element. This has a large significance in connection with mounting of a building element, for example a plate, which has to be fitted to already mounted plates.

In an additionally appropriate embodiment, and as stated in claim 3, the part includes an anchor plate, which anchor plate is mounted to the movable carrying profile.

It is hereby achieved that the tool holder does not change direction / position in relation to the plane, which the assembly trolley is positioned on, no matter how high / low the movable carrying profile is placed.

In an additionally appropriate embodiment and as stated in claim 4, the movable carrying profile includes a lower profile and one above this and with the axis parallel to it placed upper profile, which profiles include a first end part and an opposite placed second end part, which first end parts are rotatably connected to the tool holder and to each other by a first distance profile and that the second end parts are rotatably connected to each other by another distance profile.

It is hereby achieved that that when the main cylinder is displaced in vertical direction, the carrying profile's two axis parallel profiles will move up and parallel to one another in a parallelogram, and where the movement is transmitted to the tool holder whereby this and thus the tool is moved vertically up in a partial circle curve.

In an additionally preferred embodiment, and as stated in claim 5, the assembly trolley includes removable tools such as a drift, U- clamping pliers, a frame tool with side grippers, a fork shape and which tools are designed for being able to be mounted detachably on the tool holder.

As a result of the tools' replaceable gripping geometry, the assembly trolley can be used for moving and positioning plates, beams, blocks, boxes and so on.

In an additionally preferred embodiment and as stated in claim 6, the assembly trolley includes detachable counterweights placed opposite the tool holder.

It is hereby achieved that the risk of the assembly trolley being pushed over forwards, when it carries out heavy lifts and handling building elements, is minimised. The weight can be adjusted to the type of building element such that the assembly trolley does not become strained with unnecessary weight.

In an additionally preferred embodiment, and as stated in claim 7, the primary displacement design's lowering function is operated by gravity and not an applied pressure force.

It is hereby achieved that the hydraulic mechanism does not continue to contract when the carrying profile has reached its starting position, which could make it possible that the trolley would become lifted from the foundation and could thereby overturn.

In an additionally preferred embodiment and as stated in claim 8, one or more of the wheels are powered by a motor mounted to the first frame.

By making the assembly trolley motorised, the handling is eased of it and the service personnel shall use less energy on the transport itself of the building elements. The motorisation can for example include a powered motor, which is operated by a rechargeable battery or it can include a built-in generator, which supplies the necessary energy to the motor.

In an additionally preferred embodiment, according to the invention, the assembly trolley includes fastening items for mounting the removable tool.

The locking mechanism / the fastening items of the tool for the tool head is a simple and solid construction, preferably a pawl, which is designed to, by a displacement, to grip in a recess adapted to the tool. The changing of the tool can thereby occur quickly and efficiently while the tool is connected to the assembly trolley's tool holder without risk of falling off.

In an additionally preferred embodiment, according to the invention, the assembly trolley includes a tool, which is characterized by including a profile cross in which a drift is placed in the middle, which tool also includes a house, which with fastening items is mounted to the tool holder, and that the housing includes a rotational bearing, whereby the profile cross can rotate.

It is hereby achieved that a plate with a for that designed hole can be mounted on the drift and can rotate in relation to the assembly trolley.

The rotational bearing can be a ball bearing, plain bearing, bush construction.

The invention will now be explained more fully with reference to the drawing, where
Fig. 1 shows a first design example of a mobile assembly trolley according to the invention with a drift tool mounted
Fig. 2 shows the mobile assembly trolley of fig. 1 visible from the side.
Fig. 3 shows a detailed image of the tool holder shown in fig. 1.
Fig. 4 shows another design example of a mobile assembly trolley according to the invention including a beam fork tool.
Fig. 5 shows a third design example of a mobile assembly trolley according to the invention with a drift tool mounted.
Fig. 6a shows the in fig. 5 shown assembly trolley with a block fork tool mounted.
Fig. 6b shows a detailed image of the tool holder shown in fig. 6a seen in perspective from the back.
Fig. 6c shows a detailed image of the tool holder shown in fig. 6a seen in perspective from the front.

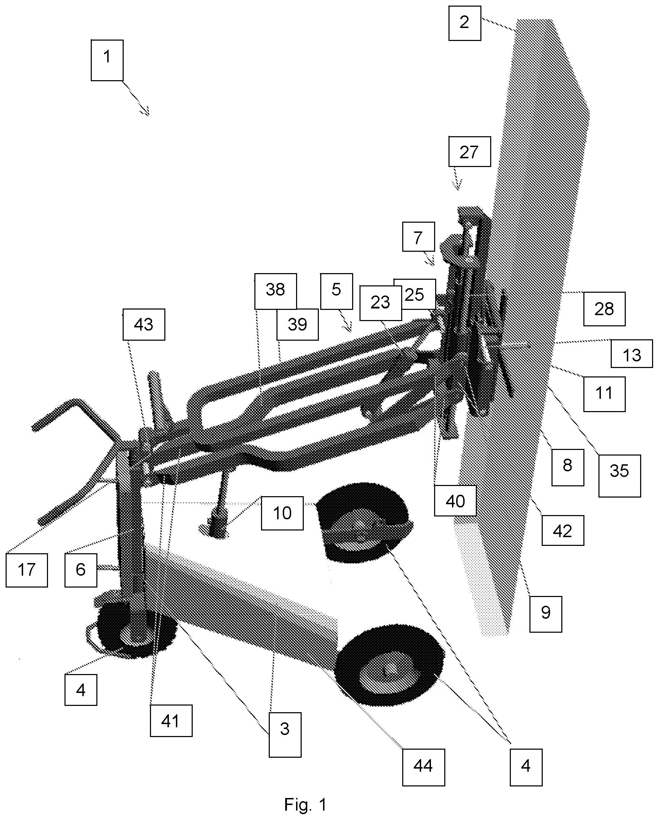

Fig. 1 shows a mobile assembly trolley 1 according to the invention including a first frame 3 on which wheels 4 are mounted. In this case three wheels 4 of which one is placed in the front and two wheels 4 closest to a tool holder 7 on which a drift tool 8 including a drift / pin 35 is mounted for handling a building element 2, here a plate, in which a hole is drilled for receiving the pin 35. The drift tooling includes a cross-profile in whose centre the drift 35 is placed. The tool further includes a housing, which with fastening devices is mounted to the tool holder and the housing includes a rotational bearing, whereby the cross profile can rotate.

The first frame 3 includes a vertical fixed profile 6. To the vertical fixed profile 6 is a movable carrying profile 5 rotatably mounted in a first turning joint 17 at one end of the vertical fixed profile 6. At the opposite end of the vertical fixed profile 6, one wheel 4 is mounted. The movable carrying profile 5 includes a lower profile 38 and one over this and with the axis parallelly placed upper profile 39, which profiles 38, 39 each include a first end part 40 and an opposite placed second end part 41, which first end parts 40 are rotatably connected to the tool holder 7 by an axis system 9 and to each other by a first spacer 42. The second end parts 41 are rotatably connected to the vertical fixed profile 6 and to each other by another distance profile 43.

The movable carrying profile 5 is by a first displacement design 10 here a hydraulic cylinder movable upwards and downwards. The cylinder is attached to the lower profile 38 and at the other end to the first frame 3, here a body 44 including a motor. When the cylinder's 10 piston rod is displaced, the carrying profile 5 is also displaced in a parallelogram (as is known by displacement of a balanced-arm lamp's position), whereby the movement is transmitted to the tool holder 7, which is moved in vertical direction up or down in a partial circle curve.

The mobile assembly trolley 1 further includes a second displacement mechanism 11 comprising a second displacement design 13 such as a hydraulic cylinder for displacement of the tool holder 7 in horizontal direction.

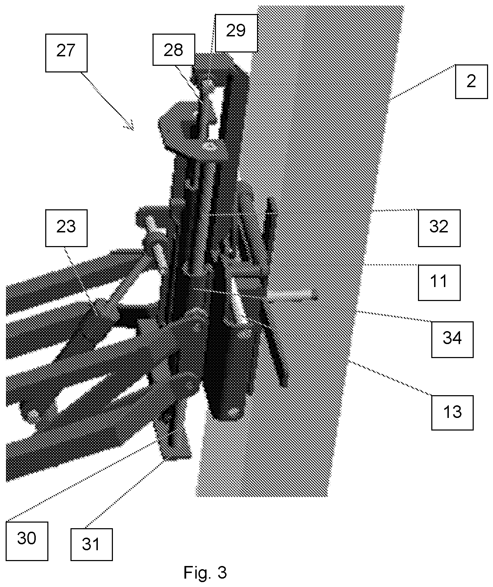

The assembly trolley 1 includes also a third displacement design 23, here consisting of a hydraulic cylinder, see also fig. 3. The third displacement design 23 is designed in such a way that it will tilt the tool holder 7 around a horizontal axis by an elongation / shortening, since the hydraulic cylinder has a working point and attachment on the tool holder 7 in a first moveable turning joint / axis, 9, situated below this horizontal axis. The cylinder is fixed to the movable carrying profile (5) and, moreover, and in this case in the end opposite situated the movable end 25.

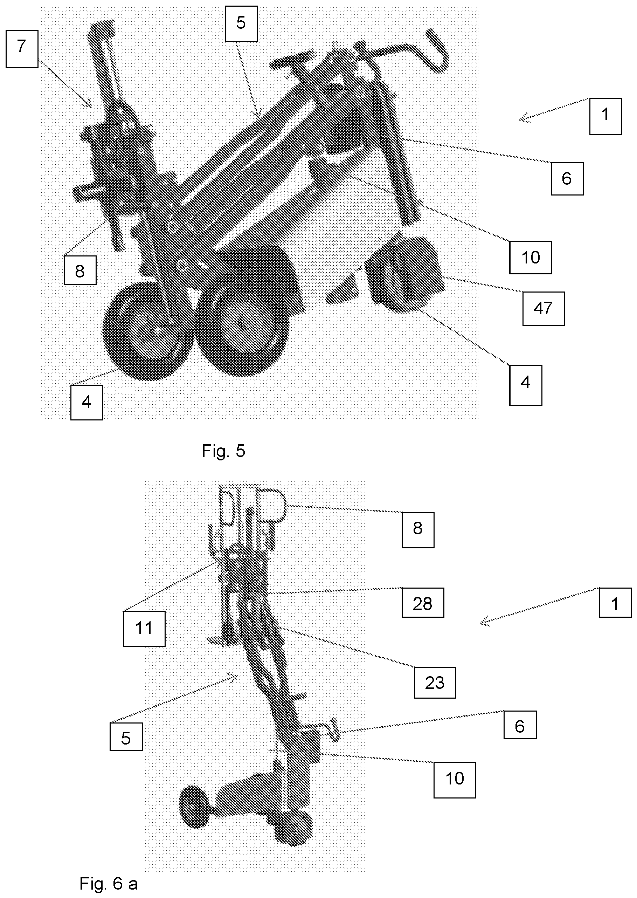

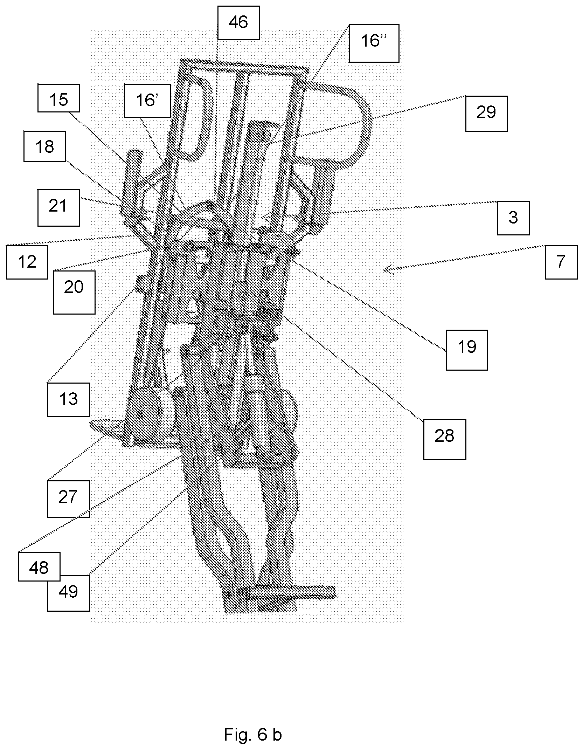

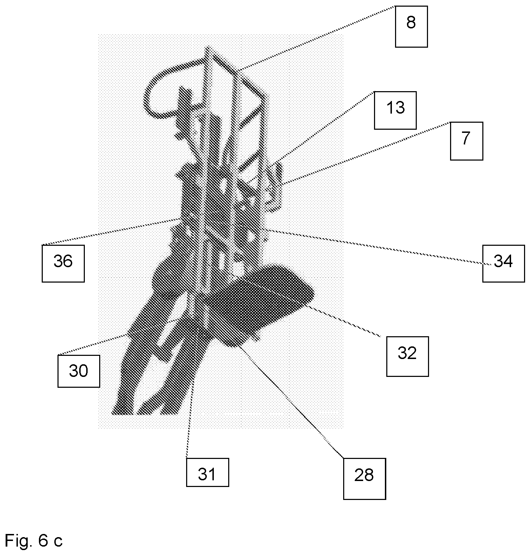

Additionally, the assembly trolley 1 includes a fourth displacement mechanism 27 designed to displace the tool holder 7 in vertical direction. With reference to fig. 3 and fig. 6b and 6, the fourth displacement mechanism 27 includes a fourth displacement design 28 such as a hydraulic cylinder comprising a first displacement end 29 and an opposite other end 30. The first displacement end 29 is secured to the tool holder 7 and the other end 30 is fixed to a first frame part 31. The fourth displacement mechanism 27 comprises a vertical guideway 32 parallel to the axis of the fourth displacement design 28. The guideway 32 here consists of two vertical bars, which at one end are mounted to the first frame part 31. The tool holder 7 comprises a sliding part 34, which encloses the vertical rods, by which the tool holder 7 is vertically movable around the guideway and axis parallel to this. In this way, the tool holder 7 can be displaced further vertically than by the displacement provided by the first displacement design 10.

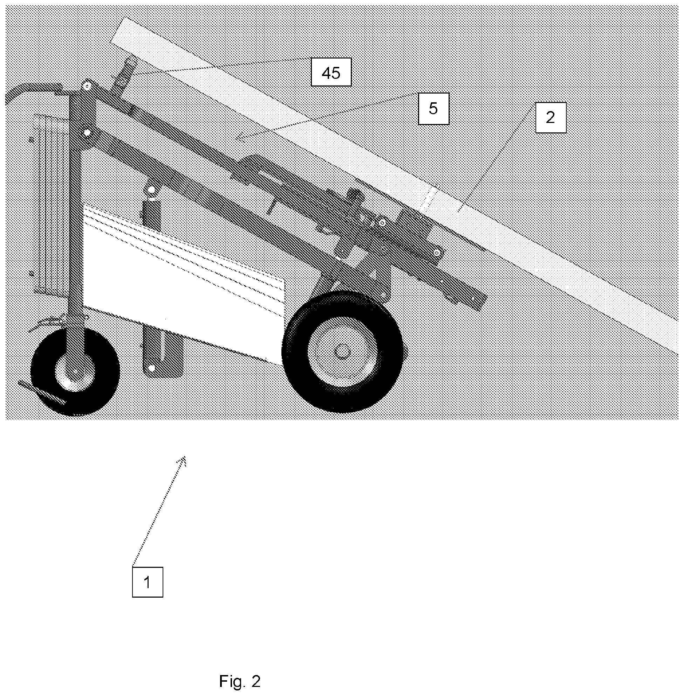

Fig. 2 shows the in Fig. 1 shown assembly trolley 1, where it carries a building plate 2, but where the plate 2 is tilted backwards until it has contact against a resting pin 45. The plate 2 is hereby parallel to the longitudinal axis of the carrying profile 5. Fig. 3 shows a detailed view of the tool holder 7. This includes for example the second displacement mechanism 11 comprising a gear construction 12 (not visible on the drawing) and the second displacement design 13. The gear 12 results in that when the second displacement design 13 is displaced with a displacement length L1, this displacement will transmit a horizontal displacement to the tool holder 7. The tool holder 7 is moved in horizontal direction with a displacement length on L2 where L2 is larger than L1. The tool shown in fig. 1-3 is a drift tool comprising a cross-profile in whose centre a drift is placed. The tool comprises a housing, which with fastening items is mounted to the tool holder. The housing includes a rotational bearing, whereby the profile cross can rotate.

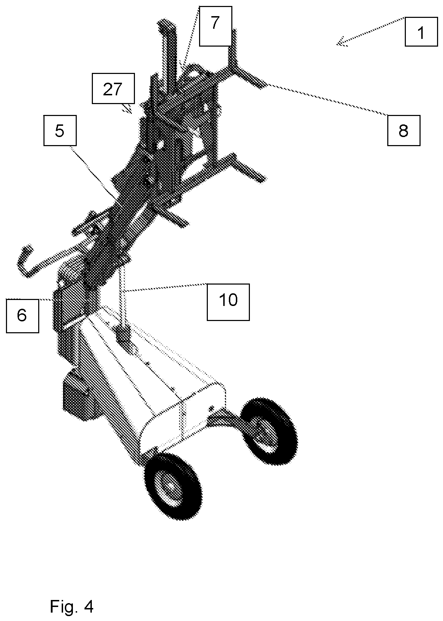

Fig. 4 shows another design example of a mobile assembly trolley 1 according to the invention comprising a removable beam fork tool 8. The tool 8 can be mounted on top of the removable drift tool, which is shown in fig. 1-3 and which handles plates. The tool is shown in the top position, which it can take using the stroke of the primary displacement design 10. Since the carrying profile 5 is moved in a circular movement, the tool is in its uppermost position located behind the front wheels 4. If there subsequently has to occur an adjustment in vertical direction, this is done by application of the fourth displacement mechanism 27, since it functions directly vertical without displacing the tool 8 in other directions than the vertical. The, in the figure, specified reference numbers refer to the same components as in the previous figures.

Fig. 5 shows a third design example of a mobile assembly trolley 1 according to the invention with a drift tool 8 mounted. The stated reference numbers refer to the same components as in the previous figures. The difference between this assembly trolley and the one shown in figure 1, is essentially that the one in figure 5 is battery-powered and includes battery etc. 47 located at the rear wheel 4, and that the overall design is modified.

Fig. 6a shows the in fig. 5 shown assembly trolley 1 with a block fork tool 8 mounted. The stated reference numbers refer to the same components as in the previous figures. Fig. 6b shows a detailed view of the tool holder 7 shown in fig. 6a seen in perspective from the back and fig. 6c shows the tool holder 7 seen in perspective from the front. With reference to fig. 6 b, c, the second displacement mechanism 11 will, including the gear construction 12, hereby be examined, since this construction is the same for all of the specified design examples.

The gear 12 includes a curved profile 15 composed of at least 2 profile pieces 16', 16" assembled in a profile turning joint 46 by which the two profile pieces 16', 16" can rotate in relation to each other. The curved profile 15 comprises a first end 18 and an opposite placed second end 19, where the first end 18 is secured to the displaceable tool holder 7 in another turning joint 20. The other end 19 is fixed to a frame. The second displacement design 13 comprises a first end part 21 which is rotatably connected to the profile 15 between the profile turning joint 46 and second turning joint 20. A part of the second displacement design 13 is attached to the frame.

The third displacement design 23 is by a part 48 connected to the movable carrying profile (5). The part 48 includes an anchor plate, which is mounted to the movable carrying profile 5.

The tool holder comprises fastening items for mounting of the tool. The attachment items comprise a pawl which is designed to, by a displacement, to grip into a, on the tool adapted, recess. The tool holder 7 is horizontally displaceable in relation to the frame and thereby becomes a displacement by application of the second displacement design 13 controlled by a horizontal guideway including horizontal and axis parallel round profiles, around which the tool holder 7 can glide for example by sliding sleeves.

The assembly trolley preferably comprises a rear wheel and two front wheels, where the front wheels can be adjusted such that they are either on the inside or on the outside of the assembly trolley's first frame. The assembly trolley can be adjusted such that it has either increased stability by placing the front wheels on the outside of the first frame or that it, by placing the front wheels on the inside of the first frame can enter into the narrow passages of ∼ 80 cm. The assembly trolley preferably comprises removable counterweights opposite the tool holder, whereby the assembly trolley can lift heavy elements of +300 kg without tipping over. As it is apparent from the above, many different tools can be mounted to the assembly trolley.

### Reference numbers B

1 mobile assembly trolley
2 building elements
3 first frame
4 wheels
5 (vertical) movable carrying profile
6 vertical profile
7 tool holder
8 changeable tool
9 axis system
10 first displacement design
11 second displacement mechanism
12 gear construction
13 second displacement design
14
15 curved profile
16 two profile pieces
17 first turning joint
18 first end for 15
19 opposite second end for 15
20 second turning joint,
21 first end part for 13
22
23 third displacement design
24
25 first end for 23
26
27. fourth displacement mechanism
28 fourth displacement design
29 first displacement end for 28
30 second end for 28
31 first frame part
32 vertical guideway
33 guideway's first end
34 sliding part
35 pin/drift?
36 ball bearing in relation to the pin
37
38 lower profile
39 upper profile
40 first end part for profiles
41 second end part for profiles
42 first distance profile
43 second distance profile.
44 body
45 resting pin
46 profile turning joint
47 battery
48 part
49 anchor plate

## Claims

1. Mobile assembly trolley (1) for transport and positioning of building elements (2) such as plates, beams, poles and blocks, which assembly trolley (1) includes a first frame (3) and wheels (4) or similar on said first frame and including a movable carrying profile (5) and a mostly vertical profile (6) to which the movable carrying profile (5) is rotatably mounted in a first turning joint (17) and a tool holder (7) for securing a tool (8), which tool holder (7) is rotatably mounted to the movable carrying profile (5), which carrying profile (5) by a primary displacement design (10) such as a hydraulic cylinder is designed to rotate around the first turning joint (17) by which the tool holder (7) performs a movement in vertical direction and that the tool holder (7) includes a second displacement mechanism (11) including a second displacement design (13) such as a hydraulic cylinder for displacement of the tool holder (7) in horizontal direction wherein the assembly trolley (1) includes a third displacement design (23) such as a hydraulic cylinder designed to tip / turn the tool holder (7) around a horizontal axis system (9), which third displacement design (23) includes a first movable end (25) which first movable end (25) is connected rotatably to the tool holder and which third displacement design (23) at a part (48) is connected to the movable carrying profile (5) wherein the second displacement mechanism (11) includes a gear construction (12) and the second displacement design (13) such as a hydraulic cylinder for creation of a horizontal displacement of the tool holder (7) and wherein the second displacement design is designed for, by a displacement length L1, to transmit a horizontal displacement to the tool holder (7) by which the tool holder (7) is moved in horizontal direction with a displacement length on L2 where L2 is larger than L1 and wherein the gear construction (12) includes a curved profile (15) composed of at least two profile pieces (16',16") connected in a profile turning joint (46) by which the two profile pieces (16',16") can rotate around the turning joint (46) in relation to each other, which curved profile (15) includes a first end (18) and an opposite second end (19), and that at least the first end (18) is secured to the displaceable tool holder (7) in a second turning joint (20), and that the second displacement design (13) includes a first and movable end part (21), which first end part (21) is rotatably connected to the profile (15) between the profile turning joint (46) and the second turning joint (20).

2. Mobile assembly trolley (1) according to claim 1 **characterized in that** the assembly trolley (1) includes a fourth displacement mechanism (27) designed to displace the tool holder (7) in vertical direction, which fourth displacement mechanism (27) includes a fourth displacement design (28) such as a hydraulic cylinder including a first displacement end (29) and a second displacement end (30), which first displacement end (29) is secured to the tool holder (7) and which second displacement end (30) is fixed to a first frame part (31), and that the fourth displacement mechanism (27) includes a vertical guideway (32) axis parallel to the fourth displacement design (28), which guideway (32) at one end is mounted to the first frame part (31) and that the tool holder includes a sliding part (34) by which the tool holder (7) is vertically displaceable around the guideway (32) and axis parallel to this.

3. Mobile assembly trolley (1) according to any of the previous claims **characterized in that** the part (48) includes an anchor plate (49), which anchor plate (49) is mounted to the movable carrying profile (5).

4. Mobile assembly trolley (1) according to any of the previous claims **characterized in that** the movable carrying profile (5) includes a lower profile (38) and one above this and with the axis parallel to it placed upper profile (39), which profiles (38,39) include a first end part (40) and an opposite placed second end part (41), which first end parts (40) are rotatably connected to the tool holder (7) and to each other by a first distance profile (42) and that the second end parts (41) are rotatably connected to each other by another distance profile (43).

5. Mobile assembly trolley (1) according to any of the previous claims **characterized in that** the mobile assembly trolley (1) includes removable / replaceable tools (8) such as a drift, U- clamping pliers, a frame with side grippers, a fork shape, which tools (8) are designed for being able to be mounted detachably on the tool holder (7).

6. Mobile assembly trolley (1) according to any of the previous claims **characterized in that** the assembly trolley (1) includes removable counterweight placed opposite the tool holder (7).

7. Mobile assembly trolley (1) according to any of the previous claims **characterized in that** the primary displacement design's (10) lowering function is operated by gravity and not an applied pressure force.

8. Mobile assembly trolley (1) according to any of the previous claims **characterized in that** one or more of the wheels (4) are powered by a motor mounted to the first frame (3).

## Patentansprüche

1. Mobiler Montagewagen (1) zum Transport und zur Positionierung von Bauelementen (2) wie Platten, Balken, Stangen und Blöcken, wobei der Montagewagen (1) einen ersten Rahmen (3) und Räder (4) oder dergleichen an dem ersten Rahmen einschließt und einschließend ein bewegliches tragendes Profil (5) und ein größtenteils vertikales Profil (6), auf dem das bewegliche tragende Profil (5) drehbar in einem ersten Drehgelenk (17) gelagert ist, und einen Werkzeughalter (7) zum Befestigen eines Werkzeugs (8), wobei der Werkzeughalter (7) drehbar an dem beweglichen tragenden Profil (5) gelagert ist, wobei das tragende Profil (5) durch eine primäre Verstellbauart (10), wie einen Hydraulikzylinder, ausgebildet ist, um das erste Drehgelenk (17) herum zu drehen, wodurch der Werkzeughalter (7) eine Bewegung in vertikaler Richtung durchführt, und wobei der Werkzeughalter (7) einen zweiten Verstellmechanismus (11) umfasst, einschließlich einer zweiten Verstellbauart (13), wie einen Hydraulikzylinder zum Verschieben des Werkzeughalters (7) in horizontaler Richtung, wobei der Montagewagen (1) eine dritte Verstellbauart (23) umfasst, wie einen Hydraulikzylinder zum Kippen / Drehen des Werkzeughalters (7) um ein horizontales Achssystem (9), wobei die dritte Verstellbauart (23) ein erstes bewegliches Ende (25) einschließt, wobei das erste bewegliche Ende (25) drehbar mit dem Werkzeughalter verbunden ist, und wobei die dritte Verstellbauart (23) an einem Teil (48) mit dem beweglichen tragenden Profil (5) verbunden ist, wobei der zweite Verstellmechanismus (11) eine Getriebekonstruktion (12) einschließt und die zweite Verstellbauart (13), wie einen Hydraulikzylinder zur Erzeugung einer horizontalen Verschiebung des Werkzeughalters (7), und wobei die zweite Verstellbauart ausgebildet ist, um durch eine Verschiebung der Länge L1 eine horizontale Verschiebung des Werkzeughalters (7) durchzuführen, durch welche der Werkzeughalter (7) in horizontaler Richtung mit einer Längenverschiebung von L2 bewegt wird, wobei L2 größer ist als L1, und wobei die Getriebekonstruktion (12) ein gekrümmtes Profil (15), bestehend aus mindestens zwei Profilstücken (16', 16"), verbunden in einem Profildrehgelenk (46) einschließt, durch welche die beiden Profilstücke (16', 16") sich um das Drehgelenk (46) in Bezug zueinander drehen können, wobei das gekrümmte Profil (15) ein erstes Ende (18) und ein entgegengesetztes zweites Ende (19) einschließt, und wobei mindestens das erste Ende (18) an dem verschiebbaren Werkzeughalter (7) in einem zweiten Drehgelenk (20) befestigt ist, und wobei die zweite Verstellbauart (13) ein erstes und bewegliches Endteil (21) einschließt, wobei das erste Endteil (21) drehbar mit dem Profil (15) zwischen dem Profildrehgelenk (46) und dem zweiten Drehgelenk (20) verbunden ist.

2. Mobiler Montagewagen (1) nach Anspruch 1, **dadurch gekennzeichnet, dass** der Montagewagen (1) einen vierten Verstellmechanismus (27), ausgelegt zur Verschiebung des Werkzeughalters (7) in vertikaler Richtung, einschließt, wobei der vierte Verstellmechanismus (27) eine vierte Verstellbauart (28) einschließt, wie einen Hydraulikzylinder, einschließend ein erstes Verstellende (29) und ein zweites Verstellende (30), wobei das erste Verstellende (29) an dem Werkzeughalter (7) befestigt ist, und wobei das zweite Verstellende (30) an einem ersten Rahmenteil (31) befestigt ist, und wobei der vierte Verstellmechanismus (27) eine vertikale Führungsschiene (32), achsparallel zur vierten Verstellbauart (28), einschließt, wobei die Führungsschiene (32) an einem Ende mit dem ersten Rahmenteil (31) montiert ist, und wobei der Werkzeughalter einen Gleitabschnitt (34) einschließt, durch welchen der Werkzeughalter (7) vertikal um die Führungsschiene (32) und achsparallel dazu verschiebbar ist.

3. Mobiler Montagewagen (1) nach einem der vorhergehenden Ansprüche, **dadurch gekennzeichnet, dass** das Teil (48) eine Ankerplatte (49) einschließt, wobei die Ankerplatte (49) am beweglichen tragenden Profil (5) montiert ist.

4. Mobiler Montagewagen (1) nach einem der vorhergehenden Ansprüche, **dadurch gekennzeichnet, dass** das bewegliche tragende Profil (5) ein unteres Profil (38) und ein oberhalb diesem und achsparallel dazu angeordnetes oberes Profil (39) einschließt, wobei die Profile (38, 39) ein erstes Endteil (40) und ein gegenüberliegendes zweites Endteil (41) einschließen, wobei die ersten Endteile (40) drehbar um den Werkzeughalter (7) und miteinander durch ein erstes Abstandsprofil (42) verbunden sind, und wobei die zweiten Endteile (41) drehbar miteinander durch ein anderes Abstandsprofil (43) verbunden sind.

5. Mobiler Montagewagen (1) nach einem der vorhergehenden Ansprüche, **dadurch gekennzeichnet, dass** der mobile Montagewagen (1) abnehmbare / austauschbare Werkzeuge (8) einschließt, wie eine Dorn-, U-Klemmzange, einen Rahmen mit Seitengreifern, eine Gabelform, einschließt, wobei die Werkzeuge (8) so ausgebildet sind, dass sie abnehmbar an dem Werkzeughalter (7) montiert werden können.

6. Mobiler Montagewagen (1) nach einem der vorhergehenden Ansprüche, **dadurch gekennzeichnet, dass** der Montagewagen (1) ein abnehmbares Gegengewicht einschließt, das gegenüber dem Werkzeughalter (7) angeordnet ist.

7. Mobiler Montagewagen (1) nach einem der vorhergehenden Ansprüche, **dadurch gekennzeichnet, dass** die Absenkfunktion der primären Verstellbauart (10) durch die Schwerkraft und nicht durch eine angebrachte Drucckraft betätigt wird.

8. Mobiler Montagewagen (1) nach einem der vorhergehenden Ansprüche, **dadurch gekennzeichnet, dass** eines oder mehrere der Räder (4) durch einen am ersten Rahmen (3) angebrachten Motor angetrieben werden.

## Revendications

1. Chariot d'assemblage mobile (1) pour le transport et le positionnement d'éléments de construction (2) tels que des plaques, poutres, poteaux et blocs, lequel chariot d'assemblage (1) inclut un premier châssis (3) et des roues (4) ou similaires sur ledit premier châssis et incluant un profil porteur mobile (5) et un profil principalement vertical (6) auquel le profil porteur mobile (5) est monté rotatif dans un premier joint tournant (17) et un porte-outil (7) pour fixer un outil (8), lequel porte-outil (7) est monté rotatif au profil porteur mobile (5), lequel profil porteur (5) par une conception primaire de déplacement (10) telle qu'un vérin hydraulique est conçu pour tourner autour du premier joint tournant (17) par lequel le porte-outil (7) met en oeuvre un mouvement en direction verticale et **caractérisé en ce que** le porte-outil (7) inclut un deuxième mécanisme de déplacement (11) incluant une deuxième conception de déplacement (13) telle qu'un vérin hydraulique pour un déplacement du porte-outil (7) en direction horizontale dans lequel le chariot d'assemblage (1) inclut une troisième conception de déplacement (23) telle qu'un vérin hydraulique conçu pour basculer / tourner le porte-outil (7) autour d'un système d'axe horizontal (9), laquelle troisième conception de déplacement (23) inclut une première extrémité mobile (25) laquelle première extrémité mobile (25) est reliée de manière rotative au porte-outil et laquelle troisième conception de déplacement (23) au niveau d'une partie (48) est reliée au profil porteur mobile (5) dans lequel le deuxième mécanisme de déplacement (11) inclut une construction à engrenages (12) et la deuxième conception de déplacement (13) telle qu'un vérin hydraulique pour création d'un déplacement horizontal du porte-outil (7) et dans lequel la deuxième conception de déplacement est conçue pour, par une longueur de déplacement L1, transmettre un déplacement horizontal au porte-outil (7) par lequel le porte-outil (7) est déplacé en direction horizontale avec une longueur de déplacement sur L2 où L2 est plus grand que L1, et dans lequel la construction à engrenages (12) inclut un profil courbé (15) composé d'au moins deux pièces de profil (16', 16") reliées dans un joint tournant de profil (46) par lequel les deux pièces de profil (16', 16") peuvent tourner autour du joint tournant (46) l'une par rapport à l'autre, lequel profil courbé (15) inclut une première extrémité (18) et une deuxième extrémité opposée (19), et **en ce qu'**au moins la première extrémité (18) est fixée au porte-outil déplaçable (7) dans un deuxième joint tournant (20), et **en ce que** la deuxième conception de déplacement (13) inclut une première partie d'extrémité mobile (21), laquelle première partie d'extrémité (21) est reliée de manière rotative au profil (15) entre le joint tournant de profil (46) et le deuxième joint tournant (20).

2. Chariot d'assemblage mobile (1) selon la revendication 1 **caractérisé en ce que** le chariot d'assemblage (1) inclut un quatrième mécanisme de déplacement (27) conçu pour déplacer le porte-outil (7) en direction verticale, lequel quatrième mécanisme de déplacement (27) inclut une quatrième conception de déplacement (28) telle qu'un vérin hydraulique incluant une première extrémité de déplacement (29) et une deuxième extrémité de déplacement (30), laquelle première extrémité de déplacement (29) est fixée au porte-outil (7) et laquelle deuxième extrémité de déplacement (30) est fixée à une première partie de châssis (31), et **en ce que** le quatrième mécanisme de déplacement (27) inclut un axe de guidage vertical (32) parallèle à la quatrième conception de déplacement (28), lequel guidage (32) à une extrémité est monté à la première partie de châssis (31) et **en ce que** le porte-outil inclut une partie coulissante (34) par laquelle le porte-outil (7) est déplaçable verticalement autour du guidage (32) et un axe parallèle à celui-ci.

3. Chariot d'assemblage mobile (1) selon l'une quelconque des revendications précédentes **caractérisé en ce que** la partie (48) inclut une plaque d'ancrage (49), laquelle plaque d'ancrage (49) est montée au profil porteur mobile (5).

4. Chariot d'assemblage mobile (1) selon l'une quelconque des revendications précédentes **caractérisé en ce que** le profil porteur mobile (5) inclut un profil inférieur (38) et placé au-dessus de celui-ci et avec l'axe parallèle à celui-ci un profil supérieur (39), lesquels profils (38, 39) incluent une première partie d'extrémité (40) et une deuxième partie d'extrémité placée opposée (41), lesquelles premières parties d'extrémité (40) sont reliées de manière rotative au porte-outil (7) et l'une à l'autre par un premier profil de distance (42) et **en ce que** les deuxièmes parties d'extrémité (41) sont reliées de manière rotative l'une à l'autre par un autre profil de distance (43).

5. Chariot d'assemblage mobile (1) selon l'une quelconque des revendications précédentes **caractérisé en ce que** le chariot d'assemblage mobile (1) inclut des outils amovibles / remplaçables (8) tels qu'une dérive, des pinces de serrage en U, un châssis avec des systèmes de préhension latéraux, une forme de fourche, lesquels outils (8) sont conçus pour pouvoir être montés de façon détachable sur le porte-outil (7).

6. Chariot d'assemblage mobile (1) selon l'une quelconque des revendications précédentes **caractérisé en ce que** le chariot d'assemblage (1) inclut un contrepoids amovible placé opposé au porte-outil (7).

7. Chariot d'assemblage mobile (1) selon l'une quelconque des revendications précédentes **caractérisé en ce que** la fonction d'abaissement de la conception primaire de déplacement (10) est mise en oeuvre par gravité et non par une force de pression appliquée.

8. Chariot d'assemblage mobile (1) selon l'une quelconque des revendications précédentes **caractérisé en ce qu'**une ou plusieurs des roues (4) sont mues par un moteur monté au premier châssis (3).
